Europäisches Patentamt

European Patent Office

Office européen des brevets

(19)

(11) Veröffentlichungsnummer: **0 249 675**

**A1**

(12) **EUROPÄISCHE PATENTANMELDUNG**

(21) Anmeldenummer: **86890165.3**

(22) Anmeldetag: **05.06.86**

(51) Int. Cl.⁴: **G05B 19/405**

(43) Veröffentlichungstag der Anmeldung:
**23.12.87 Patentblatt 87/52**

(84) Benannte Vertragsstaaten:
**AT DE FR GB IT**

(71) Anmelder: **GFM Gesellschaft für Fertigungstechnik und Maschinenbau Gesellschaft m.b.H.
Ennserstrasse 14
A-4403 Steyr(AT)**

(72) Erfinder: **Gottfried, Blaimschein, Dipl.-Ing.
Arnhalmweg 33
A-4407 Steyr(AT)**

(74) Vertreter: **Hübscher, Gerhard, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz(AT)**

(54) **Verfahren und Vorrichtung zum Erkennen einer Schneiden- oder Messerplättchenabnützung an Fräsern.**

(57) Bei einem Verfahren zum Erkennen einer Schneiden-oder Messerplättchenabnützung an Fräsern wird eine durch den Schneidvorgang beeinflußte Kenngröße über Fühler (9) erfaßt und überwacht, wobei die Änderung der von den Fühlern (9) gelieferten Meßwerte als Anzeichen für das Auftreten einer Abnützung herangezogen wird und das Überschreiten eines bestimmten Änderungsbereiches zum Auslösen einer Störmeldung dient.

Um eine zuverlässige und aufwandsarme Abnützungserkennung zu erreichen, wird die Kenngröße aus dem Bearbeitungszustand und -verhalten des Werkstückes (2) abgeleitet und die zugehörigen Meßwerte vom Werkstück (2)nach dessen Fräsbearbeitung abgenommen.

EP 0 249 675 A1

### Verfahren und Vorrichtung zum Erkennen einer Schneiden-oder Messerplättchenabnützung an Fräsern

Die Erfindung bezieht sich auf ein Verfahren zum Erkennen einer Schneiden-oder Messerplättchenabnützung an Fräsern, nach dem eine durch den Schneidvorgang beeinflußte Kenngröße über Fühler od. dgl. Meßwertaufnehmer erfaßt und überwacht wird, wobei die Änderung der von den Fühlern od. dgl. gelieferten Meßwerte asl Anzeichen für das Auftreten einer Abnützung herangezogen wird und das Überschreiten eines bestimmten Änderungsbereiches zum Auslösen einer Störmeldung od. dgl. dient, sowie auf eine Vorrichtung zur Durchführung des Verfahrens.

Da die Standzeit von Schneidwerkzeugen von vielen Faktoren abhängt, ist es schwierig, den richtigen Zeitpunkt für einen Werkzeugwechsel allein aus Erfahrungswerten oder statistischen Daten vorherzubestimmen. Es wurde daher bereits vorgeschlagen, den tatsächlichen Verschleiß der Schneiden oder Messerplättchen in mehr oder weniger langen Intervallen zu kontrollieren, wozu bisher durch Sensoren an der Fräsmaschine Form- und/oder Oberflächenstruktur der Schneiden des Fräswerkzeuges erfaßt und deren Änderung überwacht wird. Ein solches Abtasten der Schneiden ist allerdings wegen der anhaftenden Späne und Verschmutzung und auch der schlechten Zugänglichkeit der Schneiden für eine sorgfältige Kontrolle verhältnismäßig aufwendig und führt zu einem recht unsicheren Ergebnis. Bekannt ist auch ein Verfahren, bei dem die Schnittleistung gemessen und von der Leistungsänderung auf den Verschleiß geschlossen wird, was allerdings allein durch die stets schwankenden Menge des beim Fräsen abzutragenden Materials nicht zielführend ist.

Der Erfindung liegt daher die Aufgabe zugrunde, diese Mängel zu beseitigen und ein Verfahren der eingangs geschilderten Art anzugeben, das eine rationelle und zuverlässige Kontrolle der Schneiden-oder Messerplättchenabnützung erlaubt. Außerdem soll eine zweckmäßige Vorrichtung zur Durchführung diese Verfahrens geschaffen werden.

Die Erfindung löst diese Aufgabe dadurch, daß die Kenngröße aus dem Bearbeitungszustand oder -verhalten des Werkstückes abgeleitet wird und die zugehörigen Meßwerte vom Werkstück nach dessen Fräsbearbeitung abgenommen werden. Dabei kann vorzugsweise als Kenngröße der Oberflächenzustand des Werkstückes hinsichtlich Rauhigkeit, Facettenbild, Profilkontur, Temperatur, Anlauffarben od. dgl. erfaßt und überwacht werden.

Da die Bearbeitungsqualität genauso wie das Erscheinungsbild der bearbeiteten Flächen oder die durch die Bearbeitung veränderte Temperatur oder andere Zustandsgrößen stark von der Güte der Schneiden abhängig sind, läßt sich umgekehrt auch aus dem bearbeiteten Werkstück auf sehr genaue und recht einfache Weise der Grad der Schneiden-oder Messerplättchenabnützung ablesen, indem beispielsweise die Oberflächenrauhigkeit, das Bild gegebenenfalls beim Fräsen entstehender Facetten, die Genauigkeit der Profilkonturen, die Temperatur des Werkstückes und im Zusammenhang damit auch die auftretenden Anlauffarben als Kenngrößen erfaßt und auf Änderung der zugehörigen Meßwerte überwacht werden. Weichen die Istwerte dieser Kenngrößen vom durch eine einwandfreie Bearbeitung gegebenen Sollwert um ein bestimmtes Maß ab, deutet das auf eine entsprechend fortgeschrittene Abnützung der Schneiden-oder Messerplättchen hin und eine dadurch ausgelöste Störmeldung macht auf den erforderlichen Werkzeugwechsel aufmerksam. Die vom Werkstück abnehmbaren, vom Verschleißzustand der Messerplättchen abhängigen Kenngrößen sind vielfältig und können nach verschiedensten Gesichtspunkten hin für die Verschleißmessung ausgewählt werden, es kommt zu keiner Einschränkung hinsichtlich der Zugänglichkeit bei der Messung und es besteht kaum die Gefahr einer Beeinträchtigung der Meßergebnisse durch Späne od. dgl.

Um das Verfahren rationell durchführen zu können, gibt es nach einer Weiterbildung der Erfindung wenigstens einen Fühler, der auf einen bestimmten Oberflächenbereich des in einer Meßposition liegenden Werkstückes ausgerichtet oder über einen Meßroboter od.dgl. ausrichtbar ist. So kommt der Fühler in bezug auf das Werkstück immer in die richtige Lage und sorgt dadurch für vergleichbare Meßergebnisse, deren Änderung dann tatsächlich auch auf den Abnützungsgrad der Messerplättchen schließen lassen. Es können an geeigneten Werkstückaufnahmen fest montierte Fühler vorgesehen sein oder es gibt zur beweglichen Halterung der Fühler eigene Meßroboter mit einem oder mehreren entsprechend verschwenkbaren Aufnahmearmen, wobei es durchaus möglich ist, auch mehrere Kenngrößen zu überwachen, um die Sicherheit der Verschleißerkennung zu steigern.

An und für sich spielt es keine Rolle, wo die Messung der Kenngrößenwerte vorgenommen wird, doch muß immer eine bestimmte Lagezuordnung zwischen Werkstück und Fühler vorhanden sein. So kann die Meßposition des Werkstückes durch seine Einspannung in der Fräsmaschine selbst gegeben sein und die Messung der Kenngrößen in der Maschine erfolgen, doch ist es günstiger, wenn erfindungsgemäß der Fühlerbzw.

Roboter an der Ladeeinrichtung montiert ist und die Ladeeinrichtung das Werkstück beim Werkstückwechsel in seiner Meßposition aufnimmt, da so der Werkstückwechsel durch das Messen nicht zu stark verzögert wird.

Ist erfindungsgemäß eine in Reichweite der Ladeeinrichtung liegende, mit dem Fühler bzw. Roboter ausgerüstete und das Werkstück in seiner Meßposition aufnehmende Meßstation vorgesehen, kann ein zu messendes Werkstück dem serienmäßigen Fertigungsablauf entnommen und gemessen werden, ohne dadurch diesen Fertigungsablauf spürbar zu unterbrechen, was vor allem für die Massenherstellung von Kurbelwellen od. dgl. von Bedeutung ist.

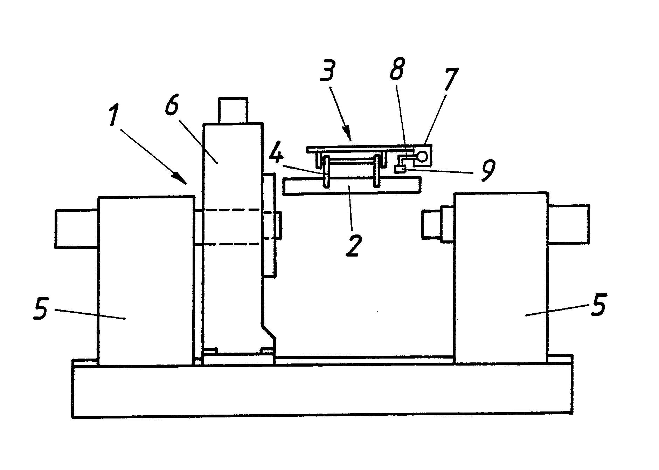

In der Zeichnung ist der Erfindungsgegenstand rein schematisch an hand einer Fräsmaschine mit einer erfindungsgemäßen Vorrichtung veranschaulicht.

Einer Fräsmaschine 1 zur Fräsbearbeitung von wellenförmigen Werkstücken 2 ist eine Ladeeinrichtung 3 zum Werkstückwechseln zugeordnet, die mittels Greifern 4 die unbearbeiteten Werkstücke 2 zwischen die Aufnahmestöcke 5 der Fräsmaschine 1 einsetzt und sie nach der Bearbeitung durch die Fräseinheit 6 den Aufnahmestöcken 5 wieder entnimmt. Auf der Ladeeinrichtung 3 ist ein Meßroboter 7 montiert, der einen schwenk baren Aufnahmearm 8 für einen Fühler 9 bildet und diesen Fühler 9 auf einen bestimmten Oberflächenbereich der von den Greifern 4 immer wieder in der gleichen Lage, einer Meßposition, aufgenommenen Werkstücke 2 ausrichtet. Dieser Fühler 9 eignet sich zum Messen der Oberflächenrauhigkeit der Werkstücke 2 oder einer anderen, von der Fräsbearbeitung beeinflußten Kenngröße, so daß durch Änderung der entsprechenden Meßwerte bei verschiedenen Werkstücken die Stärke der Schneiden-oder Messerplättchenabnützung der Fräseinheit 6 erkennbar ist. Sobald eine entsprechend große Änderung auftritt, ist das ein Anzeichen für eine zu starke Schneidenabnützung und es wird eine Störmeldung, die über einen bevorstehenden Werkzeugwechsel der Fräseinheit 6 informiert, ausgelöst.

Der Meßroboter 7 mit seinem den Oberflächenzustand der Werkstücke 2 erfassenen Fühler 9 erlaubt eine zuverlässige Verschleißmessung während eines Werkstückwechsels, so daß ohne größere Verzögerungen im Arbeitsablauf und auf einfache Weise eine ständige Kontrolle des Abnützungszustandes der Fräseinheit 6 gewährleistet ist. Da die Schneidenabnützung nicht plötzlich, sondern allmählich erfolgt, braucht die Messung der jeweiligen Kenngröße durch den Meßroboter 7 nicht bei jedem bearbeiteten Werkstück 2 zu erfolgen, sondern kann in mehr oder weniger großen Intervallen durchgeführt werden, was automatisch durch ein nicht weiter dargestelltes Zählwerk od. dgl. steuerbar ist.

## Ansprüche

1. Verfahren zum Erkennen einer Schneiden- oder Messerplättchenabnützung an Fräsern, nach dem eine durch den Schneidvorgang beeinflußte Kenngröße über Fühler od. dgl. Meßwertaufnehmer erfaßt und überwacht wird, wobei die Änderung der von den Fühlern od. dgl. gelieferten Meßwerte als Anzeichen für das Auftreten einer Abnützung herangezogen wird und das Überschreiten eines bestimmten Änderungsbereiches zum Auslösen einer Störmeldung od. dgl. dient, dadurch gekennzeichnet, daß die Kenngröße aus dem Bearbeitungszustand oder -verhalten des Werkstückes abgeleitet wird und die zugehörigen Meßwerte vom Werkstück nach dessen Fräsbearbeitung abgenommen werden.

2. Verfahren nach Anspruch 1, dadurch gekennzeichnet, daß als Kenngröße der Oberflächenzustand des Werkstükkes hinsichtlich Rauhigkeit, Facettenbild, Profilkontur, Temperatur, Anlauffarben od. dgl. erfaßt und überwacht wird.

3. Vorrichtung zum Durchführen des Verfahrens nach Anspruch 1 oder 2, mit einer Fräsmaschine (1) zum Fräsen der Werkstücke (2) und einer Ladeeinrichtung (3) zum Wechseln der Werkstücke (2), gekennzeichnet durch wenigstens einen Fühler (9) od.dgl zum Erfassen der Kenngröße, der auf einen bestimmten Oberflächenbereich des in einer Meßposition liegenden Werkstückes (2) ausgerichtet oder über einen Meßroboter (7) od.dgl. ausrichtbar ist.

4. Vorrichtung nach Anspruch 3, dadurch gekennzeichnet, daß der Fühler (9) bzw. Roboter (7) an der Ladeeinrichtung (3) montiert ist und die Ladeeinrichtung (3) das Werkstück (2) beim Werkstückwechsel in seiner Meßposition aufnimmt.

5. Vorrichtung nach Anspruch 3, dadurch gekennzeichnet, daß eine in Reichweite der Ladeeinrichtung (3) liegende, mit dem Fühler (9) bzw. Roboter (7) ausgerüstete und das Werkstück (2) in seiner Meßposition aufnehmende Meßstation vorgesehen ist.

0 249 675

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 550 107  (GENERAL ELECTRIC) <br> * Insgesamt * <br><br> --- | 1,3-5 | G 05 B  19/405 |
| X | US-A-3 545 310  (BABCOCK & WILCOX) <br> * Insgesamt * <br><br> --- | 2 | |
| X | US-A-4 326 257  (SATA) <br> * Insgesamt * <br><br> ----- | 2 | |

| RECHERCHIERTE SACHGEBIETE (Int. Cl.4) |
|---|
| G 05 B <br> B 23 Q |

Der vorliegende Recherchenbericht wurde für alle Patentansprüche erstellt.

| Recherchenort | Abschlußdatum der Recherche | Prüfer |
|---|---|---|
| DEN HAAG | 18-02-1987 | RESSENAAR J.P. |